# EUROPEAN PATENT APPLICATION

(11) **EP 4 733 921 A1**
(43) Date of publication of application: **29.04.2026**
(21) Application number: 24855238.2
(22) Date of filing: 04.03.2024
(51) Int. Cl.: G06F 3/06

(54) **DATA DEDUPLICATION METHOD, AND RELATED SYSTEM**

(30) Priority: 24.08.2023 CN 202311077281
(71) Applicant: Huawei Technologies Co., Ltd., Shenzhen, Guangdong 518129 (CN)
(72) Inventor: HU, Yuchong, Wuhan, Hubei 430074 (CN); WANG, Lin, Wuhan, Hubei 430074 (CN); MAO, Shilong, Wuhan, Hubei 430074 (CN); DONG, Ruliang, Shenzhen, Guangdong 518129 (CN); CHEN, Zehui, Shenzhen, Guangdong 518129 (CN)
(74) Representative: Goddar, Heinz J.
(86) International application number: PCT/CN2024/079790
(87) International publication number: WO 2025/039507

(57) **Abstract**

This application provides a data deduplication method, including: in response to a data deduplication request, determining a plurality of duplicate blocks from data blocks stored in a persistent medium; determining a to-be-deduplicated block from the plurality of duplicate blocks based on deduplication priorities of the plurality of duplicate blocks, where the deduplication priority of the duplicate block is determined based on an attribute of the duplicate block; and then performing deduplication on the to-be-deduplicated block, where a fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated. According to the method, the deduplication priorities are set for the data blocks by analyzing different fragmentation degrees caused by deduplication of the data blocks, and the to-be-deduplicated block is selected from the plurality of duplicate blocks based on the deduplication priorities and is deduplicated, to reduce a read fragmentation degree, thereby improving read efficiency.

## Description

This application claims priority to Chinese Patent Application No. 202311077281.6, filed with the China National Intellectual Property Administration on August 24, 2023 and entitled "DATA DEDUPLICATION METHOD AND RELATED SYSTEM", which is incorporated herein by reference in its entirety.

### TECHNICAL FIELD

This application relates to the field of storage technologies, and in particular, to a data deduplication method and apparatus, a storage system, a computer-readable storage medium, and a computer program product.

### BACKGROUND

With advent of the information age, data experiences an explosive growth. To fully use the data and mine value of the data, a storage system usually needs to be used to store the data. To meet increasing data storage requirements, a large-capacity storage system needs to be used to store the data, resulting in high storage costs.

Considering that a large amount of duplicate data is stored in the storage system, for example, 50% of the data in a primary storage system is duplicate, the data deduplication technology may be used to reduce the amount of stored data, thereby reducing data storage costs. A data deduplication process may include: dividing the data into blocks, then calculating a fingerprint (fingerprint, FP) of the data block based on content of the data block, identifying a duplicate block based on the fingerprint of the data block, and deleting the duplicate block. In this way, storage costs can be reduced.

However, data deduplication may cause originally continuously stored data to be dispersedly stored in different areas of the storage system, for example, dispersedly stored on different nodes of the distributed storage system. When the data is read, one continuous read input/output (input/output, I/O) may be degraded to a plurality of random read I/Os. In other words, data deduplication may cause a severe "read fragmentation" problem, greatly affecting read performance.

### SUMMARY

This application provides a data deduplication method. According to the method, a deduplication priority is introduced, and a to-be-deduplicated block is selected from a plurality of duplicate blocks based on the deduplication priority and is deduplicated, to reduce a read fragmentation degree, thereby improving read efficiency. This application further provides an apparatus corresponding to the foregoing method, a storage system, a computer-readable storage medium, and a computer program product.

According to a first aspect, this application provides a data deduplication method. The method may be performed by a storage system. The storage system may be a centralized storage system, including a disk-controller integrated centralized storage system and a disk-controller separated centralized storage system. Alternatively, the storage system may be a distributed storage system, including but not limited to a computing-in-memory distributed storage system and a storage-compute decoupled distributed storage system.

Specifically, in response to a data deduplication request, the storage system determines a plurality of duplicate blocks from data blocks stored in a persistent medium, and determines a to-be-deduplicated block from the plurality of duplicate blocks based on deduplication priorities of the plurality of duplicate blocks, where the deduplication priority of the duplicate block is determined based on an attribute of the duplicate block. Then, the storage system performs deduplication on the to-be-deduplicated block. A fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated.

According to the method, the storage may identify a difference between deduplication opportunities of different data blocks, sense a deduplication priority of the data block, and select a to-be-deduplicated block from the plurality of duplicate blocks based on the deduplication priority for deduplication. In this way, targeted deduplication can be implemented, a read fragmentation degree during subsequent data read can be reduced, thereby improving read performance.

**In** some possible implementations, the to-be-deduplicated block includes a plurality of to-be-deduplicated blocks that meet an aggregation condition. The aggregation condition may be that logical addresses are contiguous, an interval between the logical addresses is less than a specified length, or the interval between the logical addresses is equal to a step. A to-be-deduplicated block that meets the foregoing aggregation condition may be considered as being characterized by locality (in other words, the data block has a high probability of being read along with another data block when being read subsequently). In view of this, when performing deduplication on the foregoing to-be-deduplicated block, the storage system may aggregate the plurality of to-be-deduplicated blocks that meet the aggregation condition, write an aggregated block to the persistent medium, and then perform deduplication on the foregoing plurality of to-be-deduplicated blocks that meet the aggregation condition.

The method further supports aggregating to-be-deduplicated blocks (a plurality of to-be-deduplicated blocks that meet the aggregation condition) characterized by locality, and writing the to-be-deduplicated blocks to the persistent medium in batches (this process is also referred to as local aggregation reshuffling), to further reduce a fragmentation degree of data in the persistent medium, thereby improving read performance.

In some possible implementations, the plurality of to-be-deduplicated blocks that meet the aggregation condition are determined in the following manner: sorting, based on the logical address, a plurality of to-be-deduplicated blocks determined from the plurality of duplicate blocks; and determining, from the plurality of sorted to-be-deduplicated blocks, the plurality of to-be-deduplicated blocks that meet the aggregation condition.

According to the method, the to-be-deduplicated blocks are sorted based on the logical address, to-be-deduplicated blocks characterized by locality are identified from the to-be-deduplicated blocks, and the to-be-deduplicated blocks are aggregated and written to the persistent medium. In this way, the to-be-deduplicated blocks characterized by locality are contiguously stored in the persistent medium (physical space), so that a quantity of random I/Os decreases during read and the fragmentation degree is reduced.

In some possible implementations, the attribute of the duplicate block includes at least one of a quantity of blocks routed to a same node as the duplicate block and an expected read granularity of the duplicate block. According to the method, by analyzing factors that affect a fragmentation degree during subsequent data read, such as the quantity of blocks routed to the same node as the duplicate block and the expected read granularity of the duplicate blocks, the deduplication priority of the duplicate blocks may be accurately determined, providing reference for data deduplication.

In some possible implementations, the deduplication priority of the duplicate block is determined in the following manner: when the expected read granularity of the duplicate block is less than a preset value, determining that the priority of the duplicate block is a first priority; or when the expected read granularity of the duplicate block is greater than or equal to the preset value, determining, based on the quantity of blocks routed to the same node as the duplicate block, that the priority of the duplicate block is a second priority. The first priority is higher than the second priority.

Deduplication of a duplicate block with a small expected read granularity usually does not cause fragmentation, or a fragmentation degree is small. In view of this, the duplicate block of this type may be deduplicated preferentially. Deduplication of a duplicate block with a large expected read granularity may cause fragmentation. In view of this, the deduplication priority may be determined with reference to the quantity of blocks routed to the same node as the duplicate block.

This method analyzes impact of deduplication of duplicate blocks on the fragmentation degree from different dimensions. Deduplication is preferentially performed on duplicate blocks with little impact. In this way, the fragmentation degree can be reduced, thereby improving read performance.

In some possible implementations, the duplicate blocks include a first duplicate block and a second duplicate block, and when a quantity of blocks routed to a same node as the first duplicate block is greater than a quantity of blocks routed to a same node as the second duplicate block, a priority of the first duplicate block is higher than a priority of the second duplicate block.

According to the method, the deduplication priority is configured to be positively correlated with the quantity of blocks routed to the same node. In this way, data blocks that are prone to read amplification can be deduplicated first, ensuring subsequent read performance.

In some possible implementations, the storage system may further obtain a target deduplication ratio; perform pre-deduplication on the duplicate block, and determine a deduplication ratio of deduplicating the duplicate block based on a candidate deduplication proportion; and when the deduplication ratio of deduplicating the duplicate block based on the candidate deduplication proportion is less than the target deduplication ratio, adjust the candidate deduplication proportion until a target deduplication proportion that causes the deduplication ratio to reach the target deduplication ratio is determined. Correspondingly, the storage system may determine the to-be-deduplicated block from the plurality of duplicate blocks based on the deduplication priorities of the plurality of duplicate blocks and the target deduplication proportion.

In this way, a deduplication proportion can be adaptively adjusted, to determine the target deduplication proportion that reaches the target deduplication ratio, and select the to-be-deduplicated block based on the target deduplication proportion to perform deduplication, so that the deduplication ratio can be dynamically returned to a reachable deduplication ratio set by the system.

In some possible implementations, before determining the plurality of duplicate blocks from the data blocks stored in the persistent medium, the storage system may further receive a write request, and query a cache based on a fingerprint of the data block in the write request. The cache stores a fingerprint of a deduplicated block. When the fingerprint of the data block is not hit in the cache, the storage system may write the data block to the persistent medium.

According to the method, a cache mechanism is introduced. When data is written, whether the fingerprint of the data block is hit in the cache is first queried. If the fingerprint is not hit, the data block is written to the persistent medium. In this way, duplicate data can be filtered out, and background deduplication pressure is reduced. This further avoids backpressure on foreground read/write performance due to background deduplication read/write amplification, ensuring foreground read/write performance.

In some possible implementations, when the write request includes a target data block whose fingerprint is hit in the cache, the storage system may further determine frequency of the target data block based on reuse frequency or a reuse distance of the fingerprint. The frequency includes local frequency or global frequency. The storage system may determine, based on the frequency of the target data block, a target cache algorithm used for the target data block, and cache the target data block according to the target cache algorithm.

According to the method, the frequency of the data block is analyzed based on the reuse frequency and the reuse distance of the data block, and an appropriate cache policy is determined based on the frequency, to improve a cache hit ratio, further improving cache efficiency.

According to a second aspect, this application provides a data deduplication apparatus. The apparatus includes:
a deduplication block selection module, configured to: in response to a data deduplication request, determine a plurality of duplicate blocks from data blocks stored in a persistent medium; and determine a to-be-deduplicated block from the plurality of duplicate blocks based on deduplication priorities of the plurality of duplicate blocks, where the deduplication priority of the duplicate block is determined based on an attribute of the duplicate block; and
a deduplication execution module, configured to perform deduplication on the to-be-deduplicated block, where a fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated.

In some possible implementations, the to-be-deduplicated block includes a plurality of to-be-deduplicated blocks that meet an aggregation condition, and the deduplication execution module is specifically configured to:
aggregate the plurality of to-be-deduplicated blocks that meet the aggregation condition, and write an aggregated block to the persistent medium; and
perform deduplication on the plurality of to-be-deduplicated blocks that meet the aggregation condition.

In some possible implementations, the deduplication execution module is specifically configured to determine, in the following manner, the plurality of to-be-deduplicated blocks that meet the aggregation condition:
sorting, based on a logical address, a plurality of to-be-deduplicated blocks determined from the plurality of duplicate blocks; and
determining, from the plurality of sorted to-be-deduplicated blocks, the plurality of to-be-deduplicated blocks that meet the aggregation condition.

In some possible implementations, the attribute of the duplicate block includes at least one of a quantity of blocks routed to a same node as the duplicate block and an expected read granularity of the duplicate block.

In some possible implementations, the deduplication priority of the duplicate block is determined in the following manner:
when the expected read granularity of the duplicate block is less than a preset value, determining that the priority of the duplicate block is a first priority; or
when the expected read granularity of the duplicate block is greater than or equal to the preset value, determining, based on the quantity of blocks routed to the same node as the duplicate block, that the priority of the duplicate block is a second priority.

The first priority is higher than the second priority.

In some possible implementations, the duplicate blocks include a first duplicate block and a second duplicate block, and when a quantity of blocks routed to a same node as the first duplicate block is greater than a quantity of blocks routed to a same node as the second duplicate block, a priority of the first duplicate block is higher than a priority of the second duplicate block.

In some possible implementations, the deduplication block selection module is further configured to:
obtain a target deduplication ratio;
perform pre-deduplication on the duplicate block, and determine a deduplication ratio of deduplicating the duplicate block based on a candidate deduplication proportion; and
when the deduplication ratio of deduplicating the duplicate block based on the candidate deduplication proportion is less than the target deduplication ratio, adjust the candidate deduplication proportion until a target deduplication proportion that causes the deduplication ratio to reach the target deduplication ratio is determined.

The deduplication block selection module is specifically configured to:
determine the to-be-deduplicated block from the plurality of duplicate blocks based on the deduplication priorities of the plurality of duplicate blocks and the target deduplication proportion.

In some possible implementations, the apparatus further includes:
a writing module, configured to: receive a write request; query a cache based on a fingerprint of the data block in the write request, where the cache stores a fingerprint of a deduplicated block; and when the fingerprint of the data block is not hit in the cache, write the data block to the persistent medium.

In some possible implementations, the writing module is further configured to:
when the write request includes a target data block whose fingerprint is hit in the cache, determine frequency of the target data block based on reuse frequency or a reuse distance of the fingerprint, where the frequency includes local frequency or global frequency; and determine, based on the frequency of the target data block, a target cache algorithm used for the target data block, and cache the target data block according to the target cache algorithm.

According to a third aspect, this application provides a storage system. The storage system includes a controller and a memory. The controller and the memory communicate with each other. The controller is configured to execute instructions stored in the memory, so that the storage system performs the data deduplication method according to the first aspect or any one of the implementations of the first aspect.

According to a fourth aspect, this application provides a computer-readable storage medium. The computer-readable storage medium stores instructions, and the instructions instruct a storage system to perform the data deduplication method according to the first aspect or any one of the implementations of the first aspect.

According to a fifth aspect, this application provides a computer program product including instructions. When the computer program product runs on a storage system, the storage system is caused to perform the data deduplication method according to the first aspect or any one of the implementations of the first aspect.

In this application, based on the implementations provided in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1A is a diagram of an architecture of a disk-controller separated centralized storage system according to an embodiment of this application;
FIG. 1B is a diagram of an architecture of a disk-controller integrated centralized storage system according to an embodiment of this application;
FIG. 2A is a diagram of an architecture of a computing-in-memory distributed storage system according to an embodiment of this application;
FIG. 2B is a diagram of an architecture of a storage-compute decoupled distributed storage system according to an embodiment of this application;
FIG. 3 is a flowchart of a data deduplication method according to an embodiment of this application;
FIG. 4 is a diagram of data block routing according to an embodiment of this application;
FIG. 5 is a diagram of determining a deduplication priority and adjusting a deduplication proportion to implement a reachable deduplication ratio according to an embodiment of this application;
FIG. 6 is a schematic flowchart of performing deduplication on a to-be-deduplicated block according to an embodiment of this application;
FIG. 7 is a diagram of distribution before and after deduplication is performed on a to-be-deduplicated block according to an embodiment of this application;
FIG. 8 is a flowchart of a data processing method according to an embodiment of this application;
FIG. 9 is a diagram of global frequency and local frequency according to an embodiment of this application;
FIG. 10 is a schematic flowchart of selecting a cache algorithm according to an embodiment of this application; and
FIG. 11 is a diagram of a structure of a data deduplication apparatus according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

First, some technical terms in embodiments of this application are described.

A fingerprint (fingerprint, FP) is a value obtained by performing hashing (encryption or non-encryption) on data content in the field of data deduplication technologies. The fingerprint may be used to represent the data content.

Data deduplication usually determines fingerprints of data blocks after data is divided, finds duplicate blocks by comparing the fingerprints of the data blocks, and deletes the duplicate blocks to reduce data and storage costs. The data deduplication may be classified into pre-process deduplication and post-process deduplication based on a deduplication occasion. The post-process deduplication, also referred to as background deduplication, is performed after data is stored persistently. The background deduplication does not require fingerprint comparison during write, and therefore has a low write delay.

A data deduplication method provided in this application may be applied to storage systems. The foregoing storage systems may be classified into the following types based on logical functions: primary storage (primary storage) and backup storage (backup storage). As a storage pool or a hard disk of an upper-layer application, the primary storage can be accessed by the upper-layer application, for example, an application deployed in a virtual machine (virtual machine, VM) manner. The backup storage is used as a repository to store images, backup magnetic disks, or snapshots. Usually, the VM cannot directly access the backup storage. The primary storage and the backup storage may be physically separated storage systems, or a same storage system may serve as both the primary storage and the backup storage. The storage systems may alternatively be classified into file storage, database storage (including a row-based database or a column-based database), and big data storage based on application scenarios.

The foregoing storage systems (including the primary storage and the backup storage) may use a local storage mode or a cloud storage mode. Local storage is a mode in which data is stored in a self-owned physical storage device. Cloud storage is a mode in which data is stored in a cloud environment to support data access via a network. The cloud environment is a cluster constructed by a cloud service provider (also referred to as a cloud vendor) to provide computing resources, storage resources, and network resources. The storage system supports block storage, object storage, or file storage.

The storage system may be of a centralized storage architecture or a distributed storage architecture. In other words, the storage system may be a centralized storage system or a distributed storage system. The following separately provides examples for description.

The centralized storage system means that one or more main devices form a central node. Data is centrally stored on the central node, and all data processing services of the entire system are centrally deployed on the central node. In other words, in the centralized storage system, a terminal or a client is only responsible for data input and output, and data storage and control processing are completely completed by the central node. A prominent feature of the centralized system is that a deployment structure is simple. There is no need to consider how to deploy a plurality of nodes for a service, and therefore there is no need to consider distributed collaboration between the plurality of nodes.

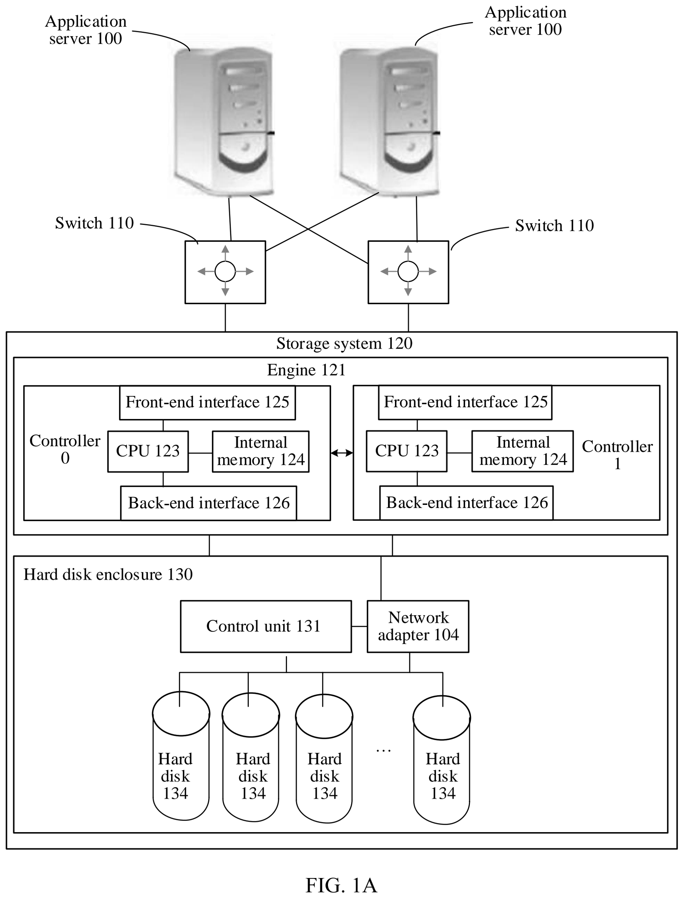

For ease of understanding, FIG. 1A is a diagram of an architecture of a centralized storage system. In an application scenario shown in FIG. 1A, a user accesses data by using application programs. A computer running these application programs is referred to as an "application server". The application server 100 may be a physical machine or a virtual machine VM. Physical machines (physical application servers) include but are not limited to a desktop computer, a server, a laptop, and a mobile device. The application server accesses the storage system through a fiber channel switch 110 to access data. However, the fiber channel switch 110 is only an optional device, and the application server 100 may alternatively directly communicate with the storage system 120 via a network. Alternatively, the fiber channel switch 110 may be replaced with an Ethernet switch, an InfiniBand (InfiniBand, IB) switch, an RDMA over converged Ethernet (RDMA over Converged Ethernet, RoCE) switch, or the like.

The storage system 120 shown in FIG. 1A is a centralized storage system. The centralized storage system features a unified portal, and all data from an external device passes through this portal. The portal is an engine 121 of the centralized storage system. The engine 121 is a core component of the centralized storage system, and many advanced functions of the storage system are implemented in the engine 121.

As shown in FIG. 1A, the engine 121 includes one or more controllers. In FIG. 1A, an example in which the engine includes two controllers is used for description. There is a mirror channel between a controller 0 and a controller 1. Therefore, after writing a piece of data into an internal memory 124 of the controller 0, the controller 0 may send a copy of the data to the controller 1 through the mirror channel, and the controller 1 stores the copy in a local internal memory 124 of the controller 1. Therefore, the controller 0 and the controller 1 back up each other. When a fault occurs on the controller 0, the controller 1 may take over a service of the controller 0, and when a fault occurs on the controller 1, the controller 0 may take over a service of the controller 1, to avoid unavailability of the entire storage system 120 caused by a hardware fault. When four controllers are deployed in the engine 121, a mirror channel exists between any two controllers, and therefore any two controllers back up each other.

The engine 121 further includes a front-end interface 125 and a back-end interface 126, where the front-end interface 125 is configured to communicate with the application server 100, so as to provide a storage service for the application server 100. The back-end interface 126 is configured to communicate with a hard disk 134, to expand a capacity of the storage system. The engine 121 may be connected to more hard disks 134 through the back-end interface 126, to form a large storage resource pool.

In terms of hardware, as shown in FIG. 1A, the controller 0 includes at least a processor 123 and the internal memory 124. The processor 123 is a central processing unit (central processing unit, CPU), and is configured to process a data access request from outside of the storage system (a server or another storage system), and is further configured to process a request generated inside the storage system. For example, when receiving, through the front-end port 125, a data write request sent by the application server 100, the processor 123 temporarily stores data in the data write request in the internal memory 124. When a total amount of data in the internal memory 124 reaches a specific threshold, the processor 123 sends, through the back-end port, the data stored in the internal memory 124 to the hard disk 134 for persistent storage.

The internal memory 124 is an internal memory that directly exchanges data with the processor. The internal memory 124 can read/write data at a high speed at any time, and serves as a temporary data memory of an operating system or another running program. The internal memory includes at least two types of memories. For example, the internal memory may be a random access memory, or may be a read-only memory (Read-Only Memory, ROM). For example, the random access memory is a dynamic random access memory (Dynamic Random Access Memory, DRAM) or a storage-class memory (Storage-Class Memory, SCM), and the read-only memory may be a programmable read-only memory (Programmable Read-Only Memory, PROM), an erasable programmable read-only memory (Erasable Programmable Read-Only Memory, EPROM), or the like.

The internal memory 124 stores a software program, and the processor 123 may run the software program in the internal memory 124 to manage the hard disk. For example, the hard disk is abstracted into a storage resource pool and then divided into LUNs to be provided for a server for use or the like. The LUN herein is actually a hard disk seen on the server. Certainly, some centralized storage systems are also file servers, and may provide a file sharing service for the server.

Hardware components and a software structure of the controller 1 (and other controllers that are not shown in FIG. 1A) are similar to those of the controller 0. Details are not described herein again.

FIG. 1A shows a disk-controller separated centralized storage system. In the system, the engine 121 may not have a hard disk slot, the hard disk 134 needs to be placed in a hard disk enclosure 130, and the back-end interface 126 communicates with the hard disk enclosure 130. The back-end interface 126 exists in the engine 121 in a form of adapter card, and one engine 121 may be connected to a plurality of hard disk enclosures through two or more back-end interfaces 126. Alternatively, the adapter card may be integrated on a mainboard. In this case, the adapter card may communicate with the processor 123 through a PCIE bus.

It should be noted that FIG. 1A shows only one engine 121. However, during actual application, the storage system may include two or more engines 121, and redundancy or load balancing is performed among a plurality of engines 121.

The hard disk enclosure 130 includes a control unit 131 and several hard disks 134. The control unit 131 may have a plurality of forms. Usually, there may be one control unit 131 or two or more control units 131. When the hard disk enclosure 130 includes at least two control units 131, there may be a belonging relationship between the hard disk 134 and the control unit 131. A function of the control unit 131 may be offloaded to a network adapter 104. In this implementation, the hard disk enclosure 130 does not have the control unit 131 inside, but the network adapter 104 completes data read/write, address translation, and another computing function. In this case, the network adapter 104 is an intelligent network adapter, and the network adapter may include a CPU and an internal memory. In some application scenarios, the network adapter 104 may further have a persistent internal memory medium, for example, a persistent memory (Persistent Memory, PM), a non-volatile random access memory (Non-Volatile Random Access Memory, NVRAM), or a phase change memory (phase change memory, PCM). The CPU is configured to perform operations such as address translation and data read/write. The internal memory is configured to temporarily store data that is to be written into the hard disk 134, or data that is read from the hard disk 134 and that is to be sent to the controller.

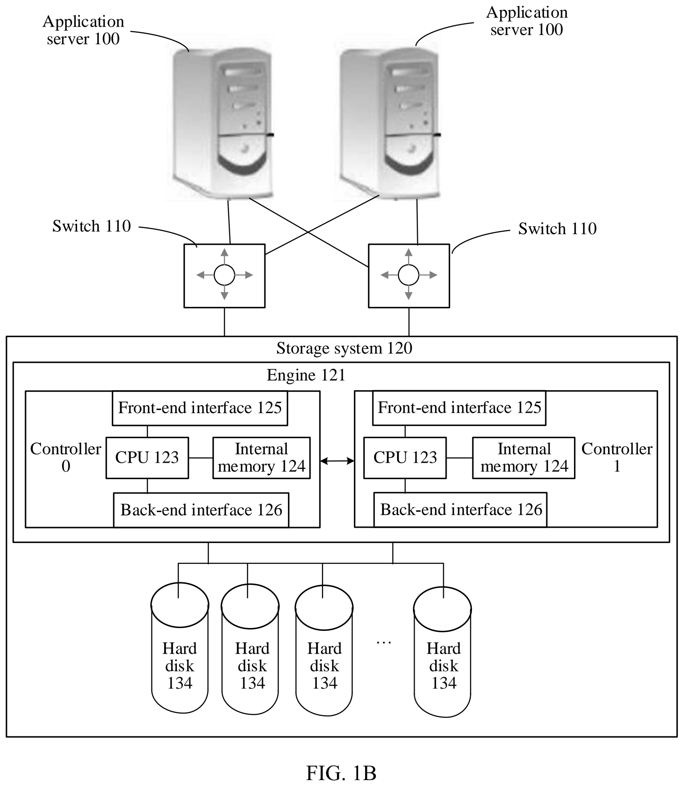

The centralized storage system may alternatively be of a disk-controller integrated architecture. In the disk-controller integrated architecture, the engine 121 has a hard disk slot, and the hard disk 134 may be directly deployed in the engine 121. The back-end interface 126 is an optional configuration. When storage space of the system is insufficient, the engine may be connected to more hard disks or hard disk enclosures through the back-end interface 126. As shown in FIG. 1B, the engine 121 may be connected to more hard disks 134 through the back-end interface 126.

A distributed storage system is a system that stores data dispersedly on a plurality of independent storage nodes. The distributed storage system is of a scalable system structure and uses a plurality of storage nodes to share storage load. The distributed storage system improves system reliability, availability, and access efficiency, and is easy to expand.

The distributed storage system may be of a computing-in-memory architecture or a storage-compute decoupled architecture. The following separately provides descriptions.

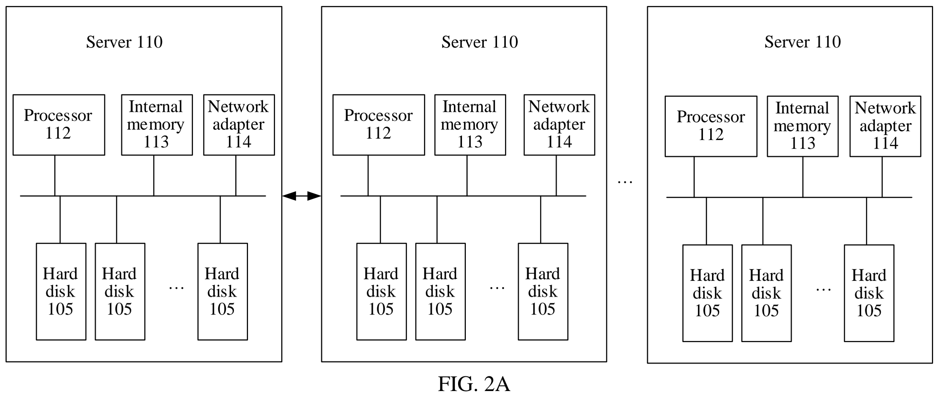

As shown in FIG. 2A, a computing-in-memory distributed storage system includes a storage cluster. The storage cluster includes one or more servers 110 (FIG. 2A shows three servers 110, but is not limited to three servers 110), and the servers 110 may communicate with each other. The server 110 is a device that has both a computing capability and a storage capability, for example, a server or a desktop computer. For example, an ARM server or an X86 server may be used as the server 110 herein. In terms of hardware, the server 110 includes at least a processor 112, an internal memory 113, a network adapter 114, and a hard disk 105. The processor 112, the internal memory 113, the network adapter 114, and the hard disk 105 are connected through a bus. The processor 112 is a central processing unit (central processing unit, CPU), and is configured to process a data access request from outside of the server 110 (an application server or another server 110), and is further configured to process a request generated inside the server 110. In addition, the processor 112 is further configured to perform computing or processing on data, for example, metadata management, deduplication, data compression, data check, storage space virtualization, and address translation.

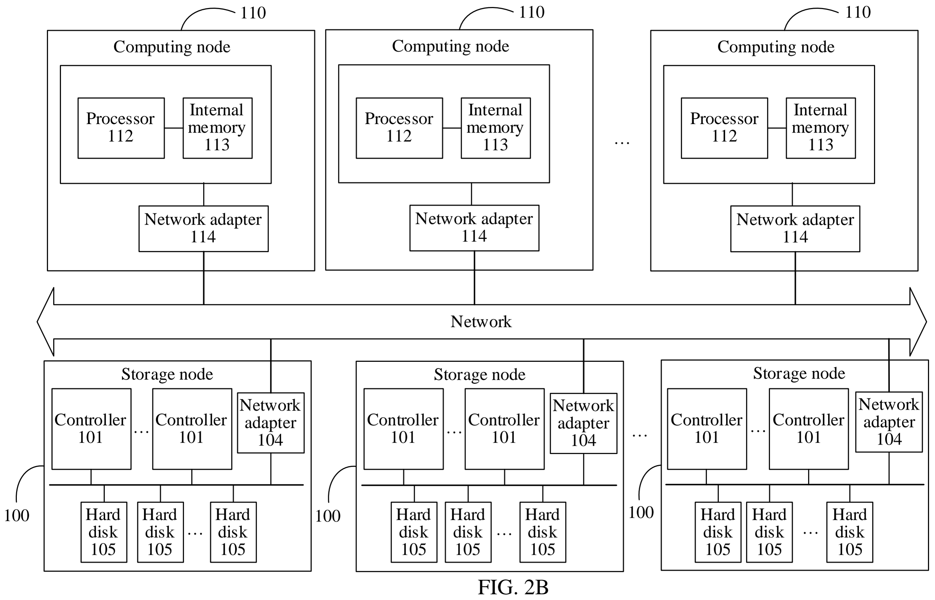

As shown in FIG. 2B, a storage-compute decoupled distributed storage cluster includes a computing cluster (also referred to as a computing node cluster) and a storage cluster (also referred to as a storage node cluster). Computing nodes 110 may communicate with each other. The computing node 110 is a computing device, for example, a server, a desktop computer, or a controller of a storage array. In terms of hardware, as shown in FIG. 2B, the computing node 110 includes at least a processor 112, an internal memory 113, and a network adapter 114. The processor 112 is a central processing unit (central processing unit, CPU), and is configured to process a data access request from outside of the computing node 110 or a request generated inside the computing node 110. When a total amount of data in the internal memory 113 reaches a specific threshold, the processor 112 sends the data stored in the internal memory 113 to a storage node 100 for persistent storage. In addition, the processor 112 is further configured to perform computing or processing on data, for example, metadata management, deduplication, data compression, storage space virtualization, and address translation.

Any computing node 110 may access any storage node 100 in the storage node cluster via a network. The storage node cluster includes a plurality of storage nodes 100 (FIG. 2B shows three storage nodes 100, but is not limited to three storage nodes 100). One storage node 100 includes one or more controllers 101, a network adapter 104, and a plurality of hard disks 105. The network adapter 104 is configured to communicate with the computing node 110. The hard disk 105 is configured to store data, and may be a magnetic disk or another type of storage medium, for example, a solid-state drive or a shingled magnetic recording hard disk. The controller 101 is configured to write data into the hard disk 105 or read data from the hard disk 105 based on a data read/write request sent by the computing node 110. In a data read/write process, the controller 101 needs to convert an address carried in the data read/write request into an address that can be identified by the hard disk. It can be learned that the controller 101 also has some simple computing functions.

It should be noted that the foregoing is merely an example for describing the storage system. In another possible implementation of embodiments of this application, the storage system may alternatively be a distributed storage system or a centralized storage system of another architecture. For example, the storage system may alternatively be a distributed storage system of a fully converged architecture.

When performing persistence on data, the storage system may divide the data into a plurality of data blocks, and the plurality of data blocks may be routed to persistent media of corresponding nodes based on a fingerprint for persistent storage. Then, the storage system may identify duplicate blocks in the background, and perform deduplication on the duplicate blocks after identifying the duplicate blocks, to reduce storage costs.

However, deduplication may cause data that can originally be continuously stored to be dispersedly stored on different nodes or different partitions. When data is read subsequently, data read that can originally be implemented through one continuous read I/O usually needs to be implemented through a plurality of random read I/Os (cross-node or cross-partition) after deduplication. This causes a severe "read fragmentation" problem.

In view of this, this application provides a data deduplication method. For the read fragmentation problem, according to the method, deduplication priorities are set for the data blocks by analyzing different fragmentation degrees caused by deduplication of the data blocks, and a to-be-deduplicated block is selected from a plurality of duplicate blocks based on the deduplication priorities and is deduplicated, to reduce a read fragmentation degree, thereby improving read efficiency. Further, according to the method, locality (if a data block has a high probability of being subsequently read along with another data block, the data block may be considered as being characterized by locality) identification may be performed on the duplicate block, duplicate blocks characterized by locality are aggregated by using a resorting method, and batch persistence is performed, to further reduce a read fragmentation degree, thereby further improving read efficiency.

To make the technical solutions of this application clearer and easier to understand, the following describes the data deduplication method in this application with reference to embodiments.

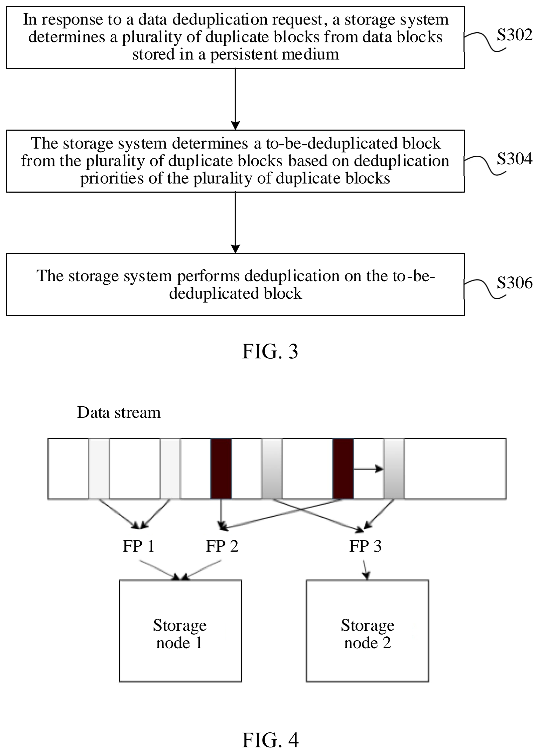

FIG. 3 is a flowchart of a data deduplication method. The method includes the following steps.

S302: In response to a data deduplication request, a storage system determines a plurality of duplicate blocks from data blocks stored in a persistent medium.

The data deduplication request is used to trigger data deduplication. In some possible implementations, the data deduplication request may be generated by an upper-layer application of the storage system in response to a deduplication operation triggered by a user. For example, the user may enable data deduplication on a setting interface of the application, and the application generates the data deduplication request in response to the operation of the user, and delivers the data deduplication request to the storage system. In some other possible implementations, the data deduplication request may alternatively be automatically generated by the storage system based on a preset deduplication trigger condition. The deduplication trigger condition may include that specified deduplication time is reached, a time interval since a previous deduplication reaches specified duration, a remaining capacity of the storage system is less than a specified capacity, or a specified proportion of duplicate data of the storage system is reached.

Specifically, when receiving the data deduplication request, the storage system may first identify duplicate blocks with same content from the data blocks stored in the persistent medium, and then perform deduplication on the duplicate blocks. Considering that fingerprints of the data blocks are obtained through calculation based on the content of the data blocks, and if the data blocks have the same content, the fingerprints of the data blocks are also the same, the storage system may identify the duplicate blocks by comparing the fingerprints of the data blocks.

In some possible implementations, the storage system may determine a plurality of duplicate blocks online. Specifically, when the data blocks are written to the persistent medium, the storage system may determine the duplicate blocks in the persistent medium based on the fingerprints of the data blocks written to the persistent medium this time and fingerprints of data blocks previously written to the persistent medium. Specifically, the storage system may maintain fingerprint metadata. The fingerprint metadata includes a fingerprint of a data block that has been written to the persistent medium. The storage system may determine the duplicate blocks in the persistent medium by comparing the fingerprint of the data block written to the persistent medium this time with the fingerprint in the fingerprint metadata. For example, if the fingerprint of the data block written to the persistent medium this time includes FP 2, and the fingerprint metadata includes the following fingerprints: FP 1, FP 2, and FP 3, it may be determined that the data block written to the persistent medium this time and a data block whose fingerprint is FP 2 that is previously written are duplicate blocks.

S304: The storage system determines a to-be-deduplicated block from the plurality of duplicate blocks based on deduplication priorities of the plurality of duplicate blocks.

The storage system may perform online theoretical analysis on fragmentation degrees caused by deduplication of different data blocks (for example, duplicate blocks), and set deduplication priorities for different data blocks (for example, duplicate blocks). A data block with a higher deduplication priority is deduplicated preferentially compared with a data block with a lower deduplication priority. It should be noted that the storage system may determine a deduplication priority when a data block identified as a duplicate block is written to the persistent medium, and the storage system may store the deduplication priority of the data block, so as to select a to-be-deduplicated block based on the deduplication priority in a subsequent deduplication process. The storage system may alternatively determine a deduplication priority of a duplicate block in real time in a deduplication process.

A deduplication priority of a data block (for example, a data block identified as a duplicate block) may be determined based on an attribute of the data block. In some possible implementations, the attribute of the data block may include at least one of an expected read granularity and a quantity of blocks routed to a same node as the data block. In view of this, for the duplicate block, the storage system may determine the deduplication priority of the duplicate block based on an expected read granularity of the duplicate block and/or a quantity of blocks routed to a same node as the duplicate block. The quantity of blocks routed to the same node as the duplicate block is a quantity of blocks that are in a same write request (write I/O) and that are routed to the same node as the duplicate block. For example, data in a write request is divided into data blocks 1 to 5, where the data block 1 is a duplicate block, and the data blocks 1, 3, and 5 are routed to a node 1. In this case, a quantity of blocks that are routed to a same node as the data block 1, which is the duplicate block, is 2.

During specific implementation, the storage system (for example, a storage node in the storage system) may obtain the expected read granularity of the duplicate block. When the expected read granularity of the duplicate block is less than a preset value, it indicates that the duplicate block is a data block that does not cause read amplification after deduplication, or the duplicate block is a data block with a small fragmentation degree after deduplication. The storage system may determine that the priority of the duplicate block is a first priority. In some examples, the first priority may be a highest priority. When the expected read granularity of the duplicate block is greater than or equal to a preset value, it indicates that the duplicate block is a data block that causes read amplification after deduplication, or the duplicate block is a data block with a large fragmentation degree after deduplication. The storage system may determine, based on the quantity of blocks routed to the same node as the duplicate block, that the priority of the duplicate block is a second priority. The first priority is higher than the second priority. It should be noted that the preset value may be set according to experience, for example, may be set to be equal to a deduplication granularity. In some examples, the preset value may be set to 4 KB.

The expected read granularity is an expected value of a granularity during subsequent read. In some possible implementations, the expected read granularity may be equal to a granularity of a write request (or a write I/O) to which the data block belongs. For example, if a data amount of data in the write request is 1 megabyte (Megabyte, MB), after data blocks obtained by dividing the data in the write request are written to the persistent medium, if a data block is identified as a duplicate block, an expected read granularity of the duplicate block may be 1 MB. In some other possible implementations, the expected read granularity may alternatively be determined by performing statistical analysis on historical data. For example, the storage system may determine the expected read granularity based on a quantity of times that data blocks that are previously written and that have a same fingerprint are accessed and a read I/O size each access. The storage system may determine an average value of read I/O sizes based on the quantity of times that the data blocks with the same fingerprint are accessed and the read I/O size each access, and the storage system may determine the average value as the expected read granularity. Alternatively, the storage system may determine a median value of the read I/O size each access, and the storage system may determine the median value as the expected read granularity.

Further, the second priority may be positively correlated with the quantity of blocks routed to the same node as the duplicate block. Specifically, the duplicate blocks may include a first duplicate block and a second duplicate block. When a quantity of blocks routed to a same node as the first duplicate block is greater than a quantity of blocks routed to a same node as the second duplicate block, a priority of the first duplicate block is higher than a priority of the second duplicate block.

For ease of understanding, the following provides descriptions with reference to an example. As shown in FIG. 4, a data stream includes two data blocks (denoted as data blocks 1 and 2) whose fingerprints are FP 1, two data blocks (denoted as data blocks 3 and 5) whose fingerprints are FP 2, and two data blocks (denoted as data blocks 4 and 6) whose fingerprints are FP 3, where the data blocks 1 and 2 and the data blocks 3 and 5 are routed to a node 1 (node 1) and the data blocks 4 and 6 are routed to a node 2 (node 2). The data blocks 1 and 2, the data blocks 3 and 5, and the data blocks 4 and 6 are identified as duplicate blocks. In this example, it is assumed that an expected read granularity of the data block is greater than 4 KB, and the storage system may determine a priority of the duplicate block based on a quantity of blocks routed to a same node as the duplicate block. A quantity of blocks routed to a same node as each of the data blocks 1, 2, 3, and 5 is 3, and a quantity of blocks routed to a same node as either of the data blocks 4 and 6 is 1. Therefore, it may be determined that deduplication priorities of the data blocks 1, 2, 3, and 5 are higher than that of the data blocks 4 and 6.

When selecting a to-be-deduplicated block, the storage system may preferentially select a duplicate block with a high deduplication priority. In some possible implementations, the storage system may sort the duplicate blocks in descending order based on the deduplication priorities of the duplicate blocks, and then select top n or top m % of the sorted duplicate blocks, and determine the top n or top m % of the sorted duplicate blocks as to-be-deduplicated blocks. In some other possible implementations, the storage system may alternatively select a duplicate block whose deduplication priority is higher than a preset priority as the to-be-deduplicated block.

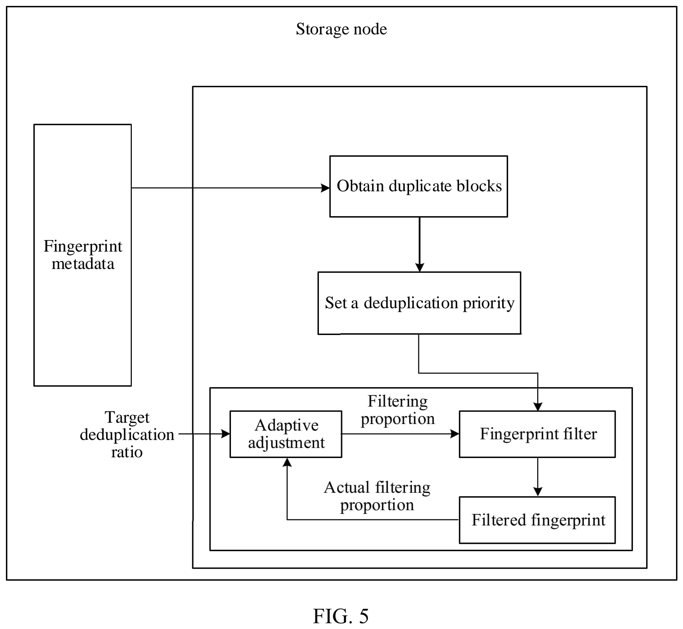

Further, the storage system may obtain a target deduplication ratio, where the target deduplication ratio is a reachable deduplication ratio of the storage system. The storage system may perform pre-deduplication on the duplicate block, and determine a deduplication ratio of deduplicating the duplicate block based on a candidate deduplication proportion. When the deduplication ratio of deduplicating the duplicate block based on the candidate deduplication proportion is less than the target deduplication ratio, the storage system may adjust the candidate deduplication proportion until a target deduplication proportion that causes the deduplication ratio to reach the target deduplication ratio is determined. As shown in FIG. 5, the storage system may input the fingerprints and the deduplication priorities of the duplicate blocks into a fingerprint filter to obtain filtered fingerprints, so as to determine an actual filtering proportion. The storage system may determine a current deduplication ratio based on the actual filtering proportion. If the current deduplication ratio is less than the target deduplication ratio, adaptive adjustment may be performed, for example, increasing the deduplication proportion. Then the storage system performs fingerprint filtering again based on an adjusted deduplication proportion until the deduplication ratio reaches the target deduplication ratio. This method uses adaptive adjustment to dynamically return the deduplication ratio to the reachable deduplication ratio set by the system.

Then, the storage system may determine the to-be-deduplicated block based on the deduplication priorities of the duplicate blocks and the target deduplication proportion. For example, the storage system may sort the duplicate blocks based on the deduplication priorities, and then select the to-be-deduplicated block from the sorted duplicate blocks based on the target deduplication proportion. Finally, some duplicate blocks are selectively deduplicated within a range of the reachable deduplication ratio, so that a quantity of random I/Os decreases and the fragmentation degree is reduced.

S306: The storage system performs deduplication on the to-be-deduplicated block.

In some possible implementations, the storage system may directly delete the to-be-deduplicated block from the persistent medium. A fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated.

In some other possible implementations, the to-be-deduplicated block includes a plurality of to-be-deduplicated blocks (for example, a plurality of to-be-deduplicated blocks that are identified as being characterized by locality) that meet an aggregation condition. The storage system may further aggregate the plurality of to-be-deduplicated blocks that meet the aggregation condition, write an aggregated block to the persistent medium, and then perform deduplication on the plurality of to-be-deduplicated blocks that meet the aggregation condition. In this way, a read fragmentation degree can be further reduced, and read performance can be improved.

The aggregation condition may be that logical addresses are contiguous (for example, an end address of a to-be-deduplicated block is contiguous with a start address of another to-be-deduplicated block), or an interval between the logical addresses is less than a specified length. Alternatively, in some read requests, a plurality of data blocks are read based on a step, and the aggregation condition may alternatively be that an interval between logical addresses is equal to the step. During specific implementation, the storage system may sort, based on the logical address, the plurality of to-be-deduplicated blocks determined from the plurality of duplicate blocks (this process is also referred to as resorting), and then determine, from the plurality of sorted to-be-deduplicated blocks, the plurality of to-be-deduplicated blocks that meet the aggregation condition.

The foregoing describes a deduplication process from a perspective of a single node, and the following describes a deduplication process from a cross-node perspective.

The storage system may add the to-be-deduplicated block to a block cache to perform subsequent data deduplication. For any node (for example, a storage node) in the storage system, a to-be-deduplicated block belonging to the node may be added to the block cache, and the node may also receive a to-be-deduplicated block sent by another node, and add the to-be-deduplicated block to the block cache. When the block cache meets a trigger condition, for example, when a quantity of blocks in the block cache reaches a first threshold or cache time reaches a second threshold, the storage system may sort a plurality of to-be-deduplicated blocks in the block cache based on a logical address. For the plurality of sorted to-be-deduplicated blocks, the storage system may aggregate the to-be-deduplicated blocks whose logical addresses meet the aggregation condition, perform deduplication write, and write an aggregated block to the persistent medium.

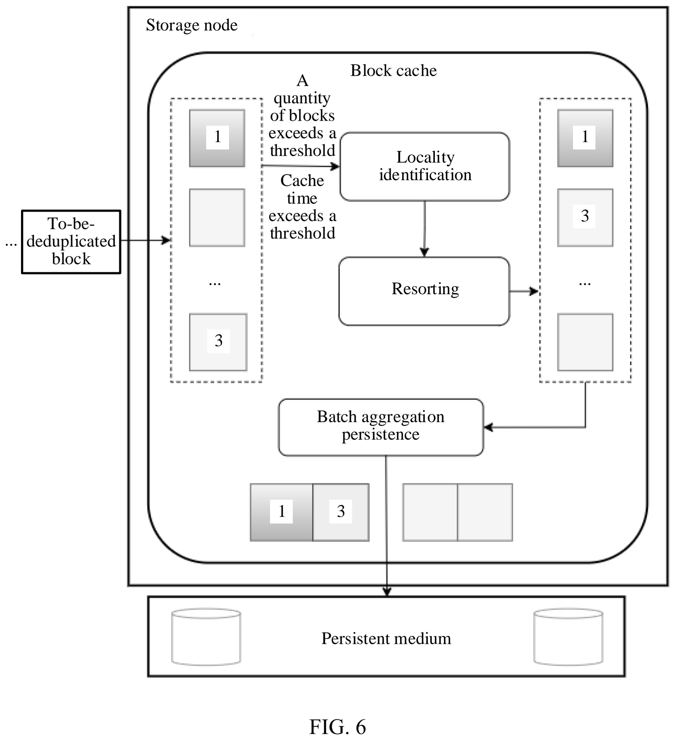

In some possible implementations, if a logical address of a to-be-deduplicated block in the block cache meets the aggregation condition, it indicates that the to-be-deduplicated block is characterized by locality. As shown in FIG. 6, the storage system may first perform locality identification on a to-be-deduplicated block, for example, determine, based on a logical address of the to-be-deduplicated block, whether the to-be-deduplicated block is characterized by locality. Then, the storage system may sort to-be-deduplicated blocks characterized by locality. The storage system may aggregate the to-be-deduplicated blocks characterized by locality, for example, aggregate the to-be-deduplicated blocks into a whole, and perform deduplication write at the same time. Finally, the to-be-deduplicated blocks characterized by locality are contiguously stored in the persistent medium (physical space), so that a quantity of random I/Os decreases during read and the fragmentation degree is reduced.

To prevent the persistent medium from storing a large quantity of copies, after the aggregated blocks are successfully written, the storage system may perform deduplication based on the plurality of to-be-deduplicated blocks (for example, to-be-deduplicated blocks characterized by locality) that meet the aggregation condition. Further, after the aggregated blocks are successfully written, the storage system may also perform deduplication on a duplicate block that has a same fingerprint as the to-be-deduplicated block used for aggregation.

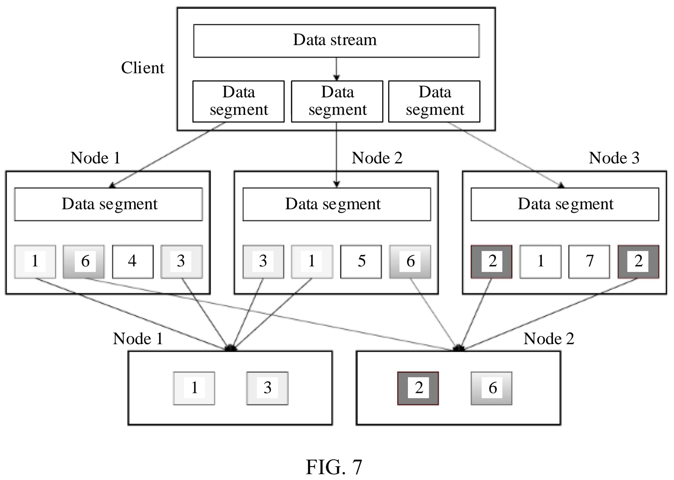

The following provides description with reference to an example. As shown in FIG. 7, a client generates a data stream (for example, a write I/O), and data in the data stream is divided into blocks and then routed to different nodes. For example, two data blocks whose fingerprints are FP 1 (denoted as 1) are routed to a node 1 and a node 2 for persistence, two data blocks whose fingerprints are FP 2 (denoted as 2) are routed to a node 3 for persistence, and two data blocks whose fingerprints are FP 6 (denoted as 6) are separately routed to the node 1 and the node 2 for persistence. The two data blocks whose fingerprints are FP 1 are duplicate blocks, the two data blocks whose fingerprints are FP 2 are duplicate blocks, the two data blocks whose fingerprints are FP 3 are duplicate blocks, and the two data blocks whose fingerprints are FP 6 are duplicate blocks. The storage system determines that either of the data blocks whose fingerprints are FP 1, either of the data blocks whose fingerprints are FP 2, either of the data blocks whose fingerprints are FP 3, and either of the data blocks whose fingerprints are FP 6 are to-be-deduplicated blocks, and identifies that to-be-deduplicated blocks whose fingerprints are FP 1 and FP 3 are characterized by locality, and to-be-deduplicated blocks whose fingerprints are FP 2 and FP 6 are characterized by locality. Therefore, the to-be-deduplicated blocks whose fingerprints are FP 1 and FP 3 may be aggregated and written to the node 1, and the to-be-deduplicated blocks whose fingerprints are FP 2 and FP 6 may be aggregated and written to the node 2. Then, the storage system performs deduplication on the to-be-deduplicated blocks, specifically, deletes the to-be-deduplicated blocks from the persistent medium. Further, the storage system may delete duplicate blocks with a same fingerprint.

Based on the foregoing content descriptions, it can be learned that in the data deduplication method in this embodiment of this application, a difference between deduplication opportunities of different data blocks may be identified, a deduplication priority of the data block is sensed, and a to-be-deduplicated block is selected from a plurality of duplicate blocks based on the deduplication priority for deduplication, to reduce a read fragmentation degree during subsequent data read, thereby improving read performance. In addition, the method further supports aggregating to-be-deduplicated blocks (a plurality of to-be-deduplicated blocks that meet the aggregation condition) characterized by locality, and writing the to-be-deduplicated blocks to the persistent medium in batches (this process is also referred to as local aggregation reshuffling), to further reduce a fragmentation degree of data in the persistent medium, thereby improving read performance.

The foregoing data deduplication method may be applied to a data write scenario. For example, after writing the data block to the persistent medium, the storage system executes the foregoing data deduplication method. This application supports introduction of a cache (for example, an online cache) to filter deduplicated data, to avoid a problem of backpressure on foreground read/write performance due to background deduplication read/write amplification caused by the deduplicated data written to disks, thereby improving resource utilization. Further, considering that a conventional cache algorithm is not designed for deduplication metadata caching, a hit ratio is low. Due to the low hit ratio, some duplicate blocks cannot be identified on a write path, increasing an amount of data to be processed by background deduplication. In view of this, this application further designs a high hit ratio cache algorithm, to further improve cache efficiency, and is especially applicable to a background deduplication scenario oriented to a primary storage. The following describes data write in this application with reference to an embodiment.

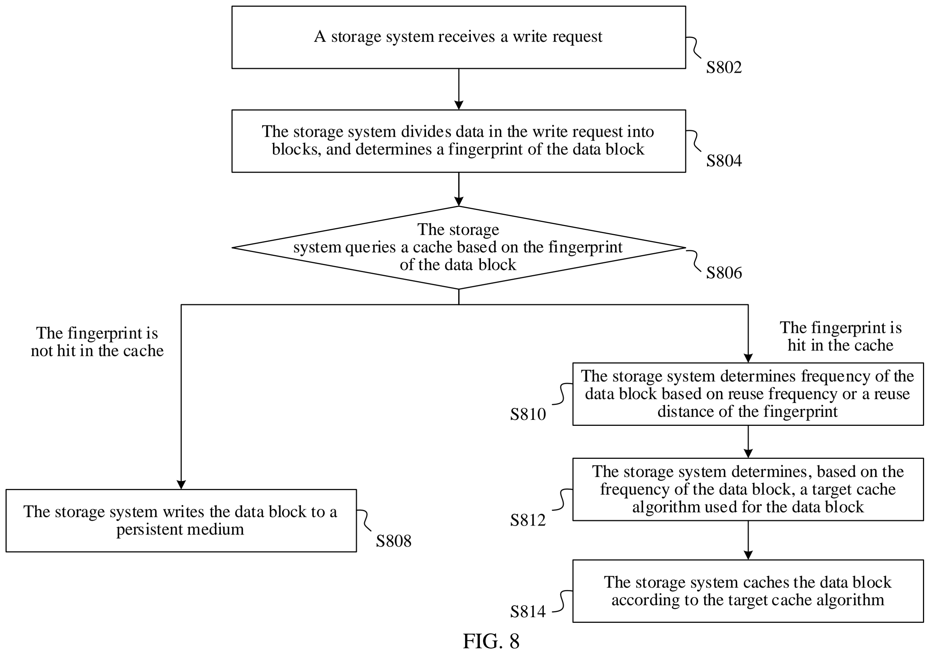

FIG. 8 is a flowchart of a data processing method. The method includes:
S802: A storage system receives a write request.

The storage system may be used as an underlying infrastructure to connect to an upper-layer application. The upper-layer application (for example, a client) may generate a write request. For example, the client may generate a write request in response to a write operation of a user. The write request includes data that needs to be written. The data may usually be in a form of a stream. In other words, the data in the write request may be a data stream (data stream).

S804: The storage system divides the data in the write request into blocks, and determines a fingerprint of the data block.

S806: The storage system queries a cache based on the fingerprint of the data block. When the fingerprint is not hit in the cache, S808 is performed. When the fingerprint is hit in the cache, S810 is performed.

When the storage system enables deduplication, the storage system may divide the data in the write request into blocks, to obtain at least one data block. The storage system may divide the data in the write request into blocks based on a configured deduplication granularity, to obtain at least one data block. The deduplication granularity may be configured based on an empirical value. In some examples, the deduplication granularity may be configured as 4 kilobytes (kilobytes, KB). For each data block in the at least one data block, the storage system may determine a fingerprint of the data block by using a hash algorithm.

In some possible implementations, the cache may store a fingerprint of a deduplicated block. The storage system may query the cache based on the fingerprint of the data block (the fingerprint of the data block obtained by dividing the data), and may determine, based on a hit condition of the fingerprint in the cache, whether the data block has a copy in a persistent medium, so as to determine a processing manner of the data block.

It should be noted that S804 and S806 may alternatively not be performed when the data deduplication method in this application is performed. For example, the storage system may directly write the data to the persistent medium without dividing the data, performing fingerprint determination, or performing fingerprint comparison operations.

S808: The storage system writes the data block to the persistent medium.

S810: The storage system determines frequency of the data block based on reuse frequency or a reuse distance of the fingerprint.

S812: The storage system determines, based on the frequency of the data block, a target cache algorithm used for the data block.

S814: The storage system caches the data block according to the target cache algorithm.

When the fingerprint is not hit in the cache, it indicates that the storage system does not perform deduplication on a data block with the same fingerprint. The persistent medium may not include a copy of the data block, or a quantity of copies of the data block is small (for example, 1), and the storage system may write the data block to the persistent medium.

If the fingerprint is hit in the cache, it indicates that the storage system has performed deduplication on a data block with the same fingerprint. The data block has a copy in the persistent medium, and the storage system does not need to perform persistent operations (also referred to as flushing or writing to disks). In this way, background deduplication pressure can be reduced, and impact of background deduplication on foreground read/write can be reduced.

For ease of description, in this application, a data block whose fingerprint is hit in a cache may also be referred to as a target data block. For the target data block, the storage system may determine a target cache algorithm used for the target data block, so as to cache the target data block according to the target cache algorithm.

Specifically, the storage system may determine frequency (for example, global frequency or local frequency) of the target data block, and then determine a cache policy of the target data block based on the frequency of the target data block, to improve a subsequent hit ratio of data caching.

The storage system may determine the frequency of the target data block based on reuse frequency (or a reuse frequency) or a reuse distance of the fingerprint. The reuse frequency or the reuse distance of the fingerprint is fingerprint metadata. The storage system may update the fingerprint metadata when writing the data block to the persistent medium. If a fingerprint of a data block is not hit in the fingerprint metadata, the storage system may add the fingerprint of the data block to the fingerprint metadata, and record reuse frequency of the fingerprint as 0 and record a reuse distance as ∞. When a fingerprint of a data block is hit in the fingerprint metadata, the storage system may increase reuse frequency of the fingerprint by 1, and determine an interval between the fingerprint and a same fingerprint written last time. For example, the storage system writes a data block 11 whose fingerprint is FP 3, and fingerprints of data blocks 1 to 10 that are previously written are FP 1, FP 5, FP 6, FP 2, FP 7, FP 3, FP 2, FP 1, FP 4 and FP 8 in sequence. In view of this, the storage system may update reuse frequency of FP 3 to 1 and update a reuse distance to 5 (for example, a quantity of spaced data blocks) in the fingerprint metadata.

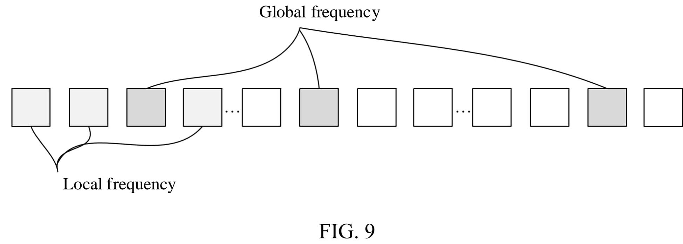

Refer to FIG. 9. Global frequency means that reuse frequency (a quantity of reuse times) reaches a specified quantity of times in a first time window, or a reuse distance is less than a specified distance. The global frequency corresponds to local frequency, and the local frequency means that reuse frequency reaches the specified quantity of times in a second time window, or a reuse distance is less than the specified distance. A length of the first time window is greater than a length of the second time window, the first time window may be a long time window, and the second time window may be a short time window. For example, if reuse frequency reaches 10 times within one day, the data block is considered as a global frequency block. If reuse frequency reaches 10 times within 10 minutes, the data block is considered as a local frequency block. In view of this, the storage system may compare reuse frequency of the fingerprint in the time window with the specified quantity of times, or compare a reuse distance of the fingerprint in the time window with the specified distance, to determine frequency of the target data block. The frequency includes local frequency or global frequency.

Generally, the storage system may select a frequency-based (Frequency-based) cache algorithm, for example, a least frequently used (Least frequently used, LFU) algorithm, to implement a high hit ratio for global frequency blocks. The storage system may determine, based on the frequency of the target data block, the target cache algorithm used for the target data block. For example, when analyzing that local frequency blocks arrive, the storage system may switch the cache algorithm to a recency-based (Recency-based) cache algorithm in time, for example, a least recently used (Least Recently Used, LRU) algorithm, to implement a high hit ratio for the local frequency blocks.

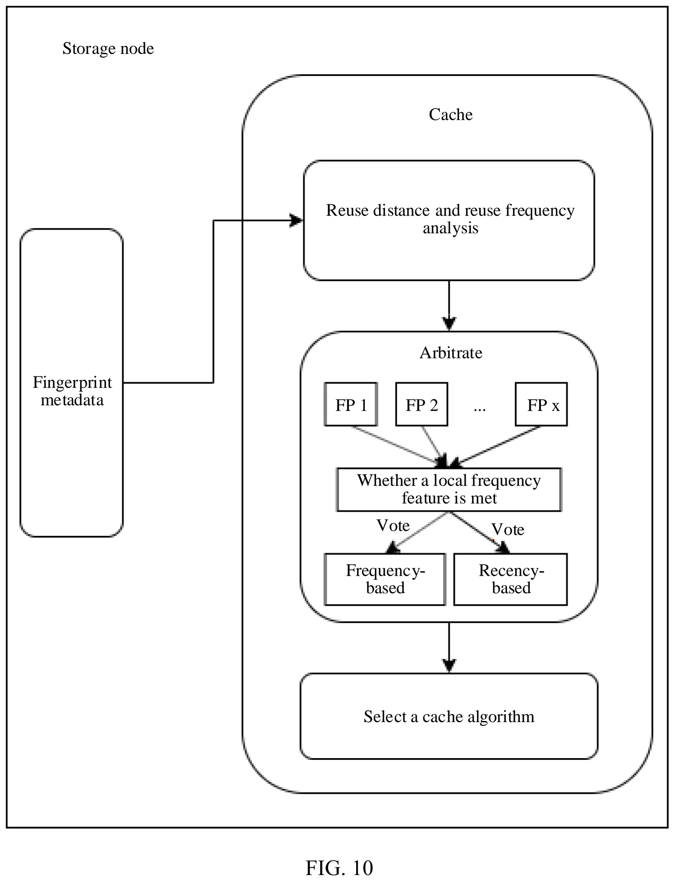

After the target data block enters the data caching, if the target data block is hit in the data caching in a future period of time (usually short time), the target data block has a local frequency feature. The storage system may collect statistics on a quantity of target data blocks (that is, local frequency blocks) having the local frequency feature, and determine whether it is necessary to use the recency-based cache algorithm. FIG. 10 is used as an example for description. In this example, the storage system may obtain the reuse distance and the reuse frequency from the fingerprint metadata, and then arbitrate the data block based on the fingerprint of the target data block. Specifically, the reuse distance or the reuse frequency of the fingerprint is obtained from the fingerprint metadata, and the reuse distance of the fingerprint is compared with the specified distance, or the quantity of reuse times of the fingerprint is compared with the specified quantity of times, to check whether the target data block is potentially hit in a future period of time. If the reuse distance is less than the specified distance, or the quantity of reuse times is greater than the specified quantity of times, it indicates that the target data block has the local frequency feature and is a local frequency block. The storage system may vote for the recency-based algorithm for the target data block (where more local frequency blocks indicate a greater voting weight); otherwise, vote for the frequency-based algorithm. Finally, the cache algorithm with a large quantity of votes is selected to improve a hit ratio of data caching in deduplication scenarios. The storage system may use a normalized eviction algorithm, and achieve an LRU or LFU effect by caching different insertion and update rules, so as to implement a cache algorithm with a high hit ratio in a deduplication scenario oriented to a primary storage.

It should be noted that S810 to S814 are optional steps in this embodiment of this application, and S810 to S814 may alternatively not be performed when the data deduplication method in this application is performed.

Alternatively, the method in this embodiment of this application may be combined with the method in the foregoing embodiment. For example, after the data block is written to the persistent medium, the data deduplication method shown in FIG. 3 may be performed, to meet different service requirements.

It can be learned from the foregoing content descriptions that, according to the method, when the data block is written, a deduplicated block may be filtered by using the cache, to prevent deduplicated data from being written to disks, ensure foreground read/write performance, and reduce background deduplication pressure. In addition, a high hit ratio cache mechanism is further designed in this application, to further improve cache efficiency.

Based on the foregoing method embodiments, this application further provides a data deduplication apparatus. The following describes the data deduplication apparatus in this application from a perspective of function modularization.

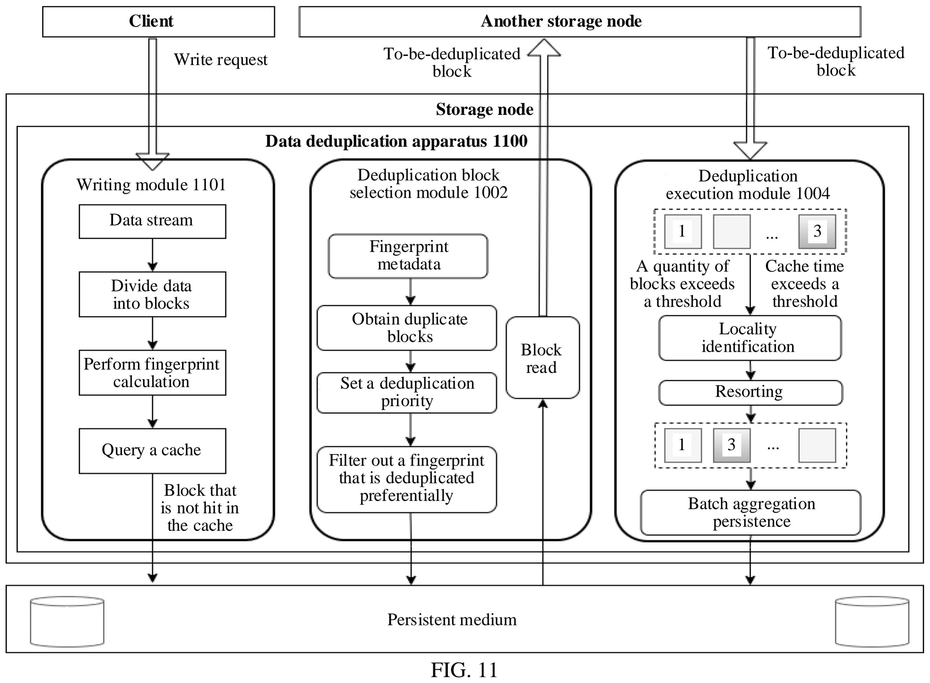

FIG. 11 is a diagram of a structure of a data deduplication apparatus. The data deduplication apparatus 1100 includes:
a deduplication block selection module 1102, configured to: in response to a data deduplication request, determine a plurality of duplicate blocks from data blocks stored in a persistent medium; and determine a to-be-deduplicated block from the plurality of duplicate blocks based on deduplication priorities of the plurality of duplicate blocks, where the deduplication priority of the duplicate block is determined based on an attribute of the duplicate block; and
a deduplication execution module 1104, configured to perform deduplication on the to-be-deduplicated block.

For a specific implementation of the deduplication block selection module 1102, refer to related content descriptions of S302 to S304 in the embodiment shown in FIG. 3. The deduplication execution module 1104 is also referred to as a promote module. For a specific implementation of the deduplication execution module 1104, refer to related content descriptions of S306 in the embodiment shown in FIG. 3.

In some possible implementations, the to-be-deduplicated block includes a plurality of to-be-deduplicated blocks that meet an aggregation condition, and the deduplication execution module 1104 is specifically configured to:
aggregate the plurality of to-be-deduplicated blocks that meet the aggregation condition, and write an aggregated block to the persistent medium; and
perform deduplication on the plurality of to-be-deduplicated blocks that meet the aggregation condition.

For a specific implementation of aggregation write and deduplication performed by the deduplication execution module 1104, refer to related content descriptions of S306 in the embodiment shown in FIG. 3. Details are not described herein again.

In some possible implementations, the deduplication execution module 1104 is specifically configured to determine, in the following manner, the plurality of to-be-deduplicated blocks that meet the aggregation condition:
sorting, based on a logical address, a plurality of to-be-deduplicated blocks determined from the plurality of duplicate blocks; and
determining, from the plurality of sorted to-be-deduplicated blocks, the plurality of to-be-deduplicated blocks that meet the aggregation condition.

For a specific implementation of resorting performed by the deduplication execution module 1104, refer to related content descriptions of S306 in the embodiment shown in FIG. 3. Details are not described herein again.

In some possible implementations, the attribute of the duplicate block includes at least one of a quantity of blocks routed to a same node as the duplicate block and an expected read granularity of the duplicate block.

In some possible implementations, the deduplication priority of the duplicate block is determined in the following manner:
when the expected read granularity of the duplicate block is less than a preset value, determining that the priority of the duplicate block is a first priority; or
when the expected read granularity of the duplicate block is greater than or equal to the preset value, determining, based on the quantity of blocks routed to the same node as the duplicate block, that the priority of the duplicate block is a second priority.

The first priority is higher than the second priority.

It should be noted that a process of determining the deduplication priority may be performed by the deduplication block selection module 1102. For example, the deduplication block selection module 1102 may determine the deduplication priority of the duplicate block in real time based on the attribute of the duplicate block. In some examples, the deduplication priority may alternatively be determined when a data block identified as a duplicate block is written to the persistent medium. In view of this, the data deduplication apparatus 1100 may further include a writing module 1101. When writing a data block into the persistent medium, the writing module 1101 determines a deduplication priority of the data block, so as to facilitate use in subsequent deduplication.

In some possible implementations, the duplicate blocks include a first duplicate block and a second duplicate block, and when a quantity of blocks routed to a same node as the first duplicate block is greater than a quantity of blocks routed to a same node as the second duplicate block, a priority of the first duplicate block is higher than a priority of the second duplicate block.

In some possible implementations, the deduplication block selection module 1104 is further configured to:
obtain a target deduplication ratio;
perform pre-deduplication on the duplicate block, and determine a deduplication ratio of deduplicating the duplicate block based on a candidate deduplication proportion; and
when the deduplication ratio of deduplicating the duplicate block based on the candidate deduplication proportion is less than the target deduplication ratio, adjust the candidate deduplication proportion until a target deduplication proportion that causes the deduplication ratio to reach the target deduplication ratio is determined.

Correspondingly, the deduplication block selection module 1104 is specifically configured to:
determine the to-be-deduplicated block from the plurality of duplicate blocks based on the deduplication priorities of the plurality of duplicate blocks and the target deduplication proportion.

For a specific implementation of determining, by the deduplication block selection module 1104, the target deduplication proportion and determining the to-be-deduplicated block based on the deduplication priority and the target deduplication proportion, refer to related content descriptions of S304 in the embodiment shown in FIG. 3.

In some possible implementations, the data deduplication apparatus 1100 may further include:
a writing module 1101, configured to: receive a write request; query a cache based on a fingerprint of the data block in the write request, where the cache stores a fingerprint of a deduplicated block; and when the fingerprint of the data block is not hit in the cache, write the data block to the persistent medium.

For a specific implementation of the writing module 1101, refer to related content descriptions in the embodiment shown in FIG. 8, for example, related content descriptions of S802 to S808. Details are not described herein again.

In some possible implementations, the writing module 1101 is further configured to:
when the write request includes a target data block whose fingerprint is hit in the cache, determine frequency of the target data block based on reuse frequency or a reuse distance of the fingerprint, where the frequency includes local frequency or global frequency; and determine, based on the frequency of the target data block, a target cache algorithm used for the target data block, and cache the target data block according to the target cache algorithm.

For a specific implementation of the writing module 1101, refer to related content descriptions in the embodiment shown in FIG. 8, for example, related content descriptions of S810 to S814. Details are not described herein again.

The writing module 1101 may alternatively form an independent data processing apparatus for writing data. For example, the data processing apparatus may include an interaction unit, a query unit, and a persistence unit. The interaction unit is configured to receive a write request. The query unit is configured to query a cache based on a fingerprint of the data block in the write request, where the cache stores a fingerprint of a deduplicated block. The persistence unit is configured to: when the fingerprint of the data block is not hit in the cache, write the data block to the persistent medium. Further, the data processing apparatus may include a cache unit, configured to: when the write request includes a target data block whose fingerprint is hit in the cache, determine frequency of the target data block based on reuse frequency or a reuse distance of the fingerprint, where the frequency includes local frequency or global frequency; and determine, based on the frequency of the target data block, a target cache algorithm used for the target data block, and cache the target data block according to the target cache algorithm.

It should be noted that FIG. 11 is described by using an example in which a storage system is a distributed system. The data deduplication apparatus 1100 is deployed on each node of the distributed system. For the data deduplication apparatus 1100 of any node, the deduplication block selection module 1104 may read a to-be-deduplicated block to a node (for example, other nodes) to which the to-be-deduplicated block belongs. Correspondingly, the deduplication execution module 1104 may receive a to-be-deduplicated block sent by another node, to perform deduplication.

For a "read fragmentation" problem caused by distributed deduplication based on block routing, this application performs system design to reduce read amplification. By using association between data blocks and identifying differences between deduplication opportunities, in a data deduplication identification and execution process, a native low-fragmentation data deduplication apparatus is provided in a manner of priority identification and local aggregation reshuffling, to improve read performance. In addition, the apparatus uses a high hit ratio cache algorithm to cache data blocks, reducing background deduplication pressure.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a storage system to perform the foregoing data deduplication method.

An embodiment of this application further provides a computer program product including instructions. The computer program product may be software or a program product that includes the instructions and that can run on a storage system or can be stored in any usable medium. When the computer program product runs on the storage system, the storage system is caused to perform the foregoing data deduplication method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the protection scope of the technical solutions of embodiments of the present invention.

## Claims

1. A data deduplication method, wherein the method comprises:
in response to a data deduplication request, determining a plurality of duplicate blocks from data blocks stored in a persistent medium;
determining a to-be-deduplicated block from the plurality of duplicate blocks based on deduplication priorities of the plurality of duplicate blocks, wherein the deduplication priority of the duplicate block is determined based on an attribute of the duplicate block; and
performing deduplication on the to-be-deduplicated block, wherein a fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated.

2. The method according to claim 1, wherein the to-be-deduplicated block comprises a plurality of to-be-deduplicated blocks that meet an aggregation condition, and the performing deduplication on the to-be-deduplicated block comprises:
aggregating the plurality of to-be-deduplicated blocks that meet the aggregation condition, and writing an aggregated block to the persistent medium; and
performing deduplication on the plurality of to-be-deduplicated blocks that meet the aggregation condition.

3. The method according to claim 2, wherein the plurality of to-be-deduplicated blocks that meet the aggregation condition are determined in the following manner:
sorting, based on a logical address, a plurality of to-be-deduplicated blocks determined from the plurality of duplicate blocks; and
determining, from the plurality of sorted to-be-deduplicated blocks, the plurality of to-be-deduplicated blocks that meet the aggregation condition.

4. The method according to any one of claims 1 to 3, wherein the attribute of the duplicate block comprises at least one of a quantity of blocks routed to a same node as the duplicate block and an expected read granularity of the duplicate block.

5. The method according to claim 4, wherein the deduplication priority of the duplicate block is determined in the following manner:
when the expected read granularity of the duplicate block is less than a preset value, determining that the priority of the duplicate block is a first priority; or
when the expected read granularity of the duplicate block is greater than or equal to the preset value, determining, based on the quantity of blocks routed to the same node as the duplicate block, that the priority of the duplicate block is a second priority, wherein
the first priority is higher than the second priority.

6. The method according to claim 5, wherein the duplicate blocks comprise a first duplicate block and a second duplicate block, and when a quantity of blocks routed to a same node as the first duplicate block is greater than a quantity of blocks routed to a same node as the second duplicate block, a priority of the first duplicate block is higher than a priority of the second duplicate block.

7. The method according to any one of claims 1 to 6, wherein the method further comprises:
obtaining a target deduplication ratio;
performing pre-deduplication on the duplicate block, and determining a deduplication ratio of deduplicating the duplicate block based on a candidate deduplication proportion; and
when the deduplication ratio of deduplicating the duplicate block based on the candidate deduplication proportion is less than the target deduplication ratio, adjusting the candidate deduplication proportion until a target deduplication proportion that causes the deduplication ratio to reach the target deduplication ratio is determined; and
the determining the to-be-deduplicated block from the plurality of duplicate blocks based on the deduplication priorities of the plurality of duplicate blocks comprises:
determining the to-be-deduplicated block from the plurality of duplicate blocks based on the deduplication priorities of the plurality of duplicate blocks and the target deduplication proportion.

8. The method according to any one of claims 1 to 7, wherein before the determining the plurality of duplicate blocks from the data blocks stored in the persistent medium, the method further comprises:
receiving a write request;
querying a cache based on a fingerprint of the data block in the write request, wherein the cache stores a fingerprint of a deduplicated block; and
when the fingerprint of the data block is not hit in the cache, writing the data block to the persistent medium.

9. The method according to claim 8, wherein when the write request comprises a target data block whose fingerprint is hit in the cache, the method further comprises:
determining frequency of the target data block based on reuse frequency or the reuse distance of the fingerprint, wherein the frequency comprises local frequency or global frequency; and
determining, based on the frequency of the target data block, a target cache algorithm used for the target data block, and caching the target data block according to the target cache algorithm.

10. A data deduplication apparatus, wherein the apparatus comprises:
a deduplication block selection module, configured to: in response to a data deduplication request, determine a plurality of duplicate blocks from data blocks stored in a persistent medium; and determine a to-be-deduplicated block from the plurality of duplicate blocks based on deduplication priorities of the plurality of duplicate blocks, wherein the deduplication priority of the duplicate block is determined based on an attribute of the duplicate block; and
a deduplication execution module, configured to perform deduplication on the to-be-deduplicated block, wherein a fragmentation degree of data in the persistent medium after the to-be-deduplicated block is deduplicated is less than a fragmentation degree of data in the persistent medium after a data block other than the to-be-deduplicated block in the plurality of duplicate blocks is deduplicated.

11. The apparatus according to claim 10, wherein the to-be-deduplicated block comprises a plurality of to-be-deduplicated blocks that meet an aggregation condition, and the deduplication execution module is specifically configured to:
aggregate the plurality of to-be-deduplicated blocks that meet the aggregation condition, and write an aggregated block to the persistent medium; and
perform deduplication on the plurality of to-be-deduplicated blocks that meet the aggregation condition.

12. The apparatus according to claim 11, wherein the deduplication execution module is specifically configured to determine, in the following manner, the plurality of to-be-deduplicated blocks that meet the aggregation condition:
sorting, based on a logical address, a plurality of to-be-deduplicated blocks determined from the plurality of duplicate blocks; and
determining, from the plurality of sorted to-be-deduplicated blocks, the plurality of to-be-deduplicated blocks that meet the aggregation condition.

13. The apparatus according to any one of claims 10 to 12, wherein the attribute of the duplicate block comprises at least one of a quantity of blocks routed to a same node as the duplicate block and an expected read granularity of the duplicate block.

14. The apparatus according to claim 13, wherein the deduplication priority of the duplicate block is determined in the following manner:
when the expected read granularity of the duplicate block is less than a preset value, determining that the priority of the duplicate block is a first priority; or
when the expected read granularity of the duplicate block is greater than or equal to the preset value, determining, based on the quantity of blocks routed to the same node as the duplicate block, that the priority of the duplicate block is a second priority, wherein
the first priority is higher than the second priority.

15. The apparatus according to claim 14, wherein the duplicate blocks comprise a first duplicate block and a second duplicate block, and when a quantity of blocks routed to a same node as the first duplicate block is greater than a quantity of blocks routed to a same node as the second duplicate block, a priority of the first duplicate block is higher than a priority of the second duplicate block.

16. The apparatus according to any one of claims 10 to 5, wherein the deduplication block selection module is further configured to:
obtain a target deduplication ratio;
perform pre-deduplication on the duplicate block, and determine a deduplication ratio of deduplicating the duplicate block based on a candidate deduplication proportion; and
when the deduplication ratio of deduplicating the duplicate block based on the candidate deduplication proportion is less than the target deduplication ratio, adjust the candidate deduplication proportion until a target deduplication proportion that causes the deduplication ratio to reach the target deduplication ratio is determined; and
the deduplication block selection module is specifically configured to:
determine the to-be-deduplicated block from the plurality of duplicate blocks based on the deduplication priorities of the plurality of duplicate blocks and the target deduplication proportion.

17. The apparatus according to any one of claims 10 to 16, wherein the apparatus further comprises:
a writing module, configured to: receive a write request; query a cache based on a fingerprint of the data block in the write request, wherein the cache stores a fingerprint of a deduplicated block; and when the fingerprint of the data block is not hit in the cache, write the data block to the persistent medium.

18. The apparatus according to claim 17, wherein the writing module is further configured to:
when the write request comprises a target data block whose fingerprint is hit in the cache, determine frequency of the target data block based on reuse frequency or the reuse distance of the fingerprint, wherein the frequency comprises local frequency or global frequency; and determine, based on the frequency of the target data block, a target cache algorithm used for the target data block, and cache the target data block according to the target cache algorithm.

19. A storage system, wherein the storage system comprises a controller and a memory, the memory stores computer-readable instructions, and the controller executes the computer-readable instructions, so that the storage system performs the method according to any one of claims 1 to 9.

20. A computer-readable storage medium, comprising computer-readable instructions, wherein the computer-readable instructions are used for implementing the method according to any one of claims 1 to 9.

21. A computer program product, comprising computer-readable instructions, wherein the computer-readable instructions are used for implementing the method according to any one of claims 1 to 9.
